# EUROPEAN PATENT SPECIFICATION

(11) **EP 3 318 688 B1**
(45) Date of publication and mention of the grant of the patent: **22.04.2020**
(21) Application number: 17199937.8
(22) Date of filing: 03.11.2017
(51) Int. Cl.: E04C 2/04, E04C 2/288, B29C 44/12, B29C 44/18, E04B 2/86

(54) **PREFAB BUILDING ELEMENT AND METHOD FOR MANUFACTURING SUCH PREFAB BUILDING ELEMENT**
VORGEFERTIGTES BAUELEMENT UND VERFAHREN ZU DESSEN HERSTELLUNG
ELÉMENT DE CONSTRUCTION PRÉFABRIQUÉ ET SON PROCÉDÉ DE FABRICATION

(30) Priority: 04.11.2016 NL 2017719
(43) Date of publication of application: 09.05.2018
(73) Proprietor: Jade Holding B.V., 5331 BA Kerkdriel (NL)
(72) Inventor: DEKKERS, Jan, 5331 BA Kerkdriel (NL)
(74) Representative: Patentwerk B.V.

(56) References cited:
- EP-A1- 0 837 194
- EP-A2- 0 756 047
- DE-U1-202004 019 390
- FR-A- 1 405 985
- FR-A1- 2 202 995

## Description

The invention relates to a method for manufacturing a prefab building element. The invention further relates to such prefab building element.

The prefabrication of building elements can have several benefits, for example in order to speed up and improve the quality of the construction process or to improve the safety at the construction site. Prefab building elements are commonly produced by using a horizontal mould or framework in which positioning of bricks takes place, on top of and between which mortar is sprayed or poured. The mortar extends over the entire panel and therefore bonds the bricks in the mould together, forming a first wall part. Thereafter an insulation layer, for example in the form of an insulating sheets or plates, such as PIR or PUR panels, is directly or via a spacer positioned on top of the mortar, possibly in combination with an air cavity for ventilation of the building element. At last a second wall part, for example in the form of a panel, can be positioned on top of the insulation layer. The wall parts, insulation layer and other construction elements can for example be joined together via mechanical joining elements such as anchoring hooks.

FR2202995 for instance discloses a wall panel with integrated insulation, consisting of an outer wall made of conventional building materials, and inner wall made of plaster tiles and of an insulating layer formed of a plastic foam molded between the two walls, wherein the walls comprise means for absorbing the pressure to the excess formation of the foam of synthetic material.

The industrial application of prefab building elements, and in particular of prefab cavity walls is still limited. This may be explained by the fact that the current methods for manufacturing of these prefab building elements are comprehensive, time and labour intensive and costly.

The present invention has for its object to provide an improved method to produce prefab building elements and to overcome the abovementioned drawbacks.

The invention provides for this purpose a method for manufacturing a prefab building element, comprising the steps of providing a first wall part made of concrete, vertically positioning the first wall part, building a masonry wall forming a second wall part at a predetermined distance from the first wall part, thus forming a cavity in between said first wall part and said second wall part, and the step of bonding the first wall part and the second wall part by filling the cavity with an essentially liquid foam insulation material.

Bonding the first and second wall part with the insulation material according to the invention is considered to be that the first and second wall parts are connected to each other with the insulation material, in which the insulation material provides rigidity and structural integrity to the building element through this connection. The bonding of the two wall parts could further be realized with mechanical joining elements, such as anchoring hooks or wall ties. The bonding of the two wall parts with such mechanical joining elements, besides the connection of the wall parts via the insulation material, is not excluded in the present invention.

Manufacturing the entire construction in this vertical manner has several benefits and can speed up the production time at several points in the process. The first wall part is preferably a (single) fully cured concrete wall part, which makes that no additional curing time of concrete is required during the fabrication process. Additionally, freshly produced elements are typically prone to damage since the mortar is not fully cured yet. Manufacturing the construction in a vertical way limits the forces and tension on these freshly produced panels, since they do not need to be rotated or handled as much as during the horizontal production process.

Preferably, the concrete first wall part is of the same height and width as the finished prefab building element. In producing the prefab building element, the complete first wall part can thus be supplied as a finished concrete part. This saves time in manufacturing the prefab element. The concrete first wall part is preferably between 1 and 5 meters high, and the prefab building element is preferably also between 1 and 5 meters high. Additionally, the concrete wall part provides structural integrity to the building element to be produced, in particular during the early phases of the masonry wall.

During step b) of the method, the method preferably comprises the step that the complete first wall part is positioned vertically at once, for instance by turning the first wall part vertically or turning the first wall part upright. Especially when the first wall part is provided as a fully cured single piece concrete wall, the complete first wall part can be produced by simply turning the wall part upright.

Another benefit can be found in the fact that the insulation material provides for a bonding between the wall elements. Because the foam insulation material is provided in an essentially liquid state, the material will provide a good adhesion with the first wall part and the second wall part. No additional bonding layers or bonding materials have to be applied, but additional bonding layers or bonding materials, such as wall ties, may be present to further strengthen the building element. Furthermore, applying the essentially liquid foam material in the cavity between the vertically positioned wall parts makes that a more homogeneous bonding layer without impurities as air-gaps will be formed between the wall parts. When for instance prefabricated insulation panels are used, the connection between the panels is typically not air and watertight and results in crack formation between the panels. The essentially liquid foam insulation material provides an airtight and watertight layer and will also enhance the rigidity of the construction. The insulation material typically expands after application due to a chemical reaction with the surrounding air and water, to fill up the cavity between the wall parts, preventing air and water from penetrating the panel. Since the insulation material also bonds the two layers, a stronger panel is produced. This allows for using less or even no additional connecting element connecting the first and second wall parts, which saves material and labour, and thus costs.

Another benefit can be found in the fact that less material is required for the building element. Both for the wall parts as for the insulation layer is it possible to minimize the thickness of the layers and therewith the required amount of materials, since the foam insulating material increases the rigidity and thus the structural integrity of the panel. The thickness of in particular the first concrete wall part is chosen for the required structural integrity. Increasing the strength or rigidity of the panel using the insulation foam this allows for using a thinner first concrete wall part to achieve the same strength of panel. As outlined above, no additional bonding or connecting elements have to be applied, which connect the insulting material to the wall parts. However, the presence of such elements is not excluded in the present invention. Freshly produced elements are typically prone to damage since the mortar is not fully cured yet. Manufacturing the construction in a vertical way limits the forces and tension on these freshly produced panels, since they do not need to be rotated or handled as much as during the horizontal production process. Due to the vertical building configuration, the prefab building element is easier to handle compared to horizontally produced building elements which are often relatively thick compared to the construction requirements in order to ensure stability during handling, transport and positioning.

The prefab elements which are produced by the known horizontal method in moulds need additional drying or curing time of the poured concrete, but need to be turned 90 degrees after producing as well, to turn the produced panels upright. Such turning motion of the concrete introduces forces in the concrete, against which concrete is typically not protected. The turning motion increases the risk of snapping or breaking the brickwork, which is unwanted. Producing the panels in the vertical manner according to the invention prevents this step.

A prefab building element as manufactured via the method outlined above is preferably applicable as an outer wall of a building.

The bonding of the first and second wall part by filling the cavity with an essentially liquid expandable foam insulation material preferably comprises the step of allowing the expandable foam to expand, thereby filling the cavity and bonding the first and second wall part (during expansion). In particular, this expanding of the foam in the cavity result in that the insulation material is completely filling the cavity, without leaving a cavity wall in the formed prefab building element. By letting the foam expand in the cavity between the wall parts, the cavity can be completely filled with expanded foam, resulting in a water- and airtight panel, which is insulated. For building elements of the same thickness compared to panels including an air cavity the insulation properties of the element is improved since the insulation material has an improved insulating property compared to the layer of air in the cavity. For building elements with similar insulation values, the thickness of the elements may be reduced with the present invention.

In a preferred embodiment of the present invention, the second wall part is constructed by a brick-laying robot. Applying a brick-laying robot or construction robot is beneficial in order to enhance the applicability for large scale industrial application. Furthermore, the use of a brick-laying robot will enhance the site safety and can significantly decrease the production time. Robots can provide an improved quality due to their ability to work with high precision and high repeatability which accuracy also can reduce the amount of waste.

Preferably the masonry wall is build such that there are spaces between the bricks in order to allow mortar joints to be provided. Mortar joints can improve the visual appearance of the wall, but can for example also enhance the rain resistance of the brickwork. Therefore, the invention also relates to a method wherein mortar joints are provided in the masonry wall. The mortar joints are preferably applied in the prefabrication phase. However, it is also possible to provide the masonry wall with mortar joints when the prefab building element is positioned in its final location. The mortar joints can for example be flush joints or weathered struck joints, but also concave joints, ironed joints, V-joints, raked joints, extruded joints, struck joints, cut joints or any other suitable type of mortar joint. The possibility that every desired type of mortar joint can be applied makes that the prefab building elements can be adjusted to individual preferences while the elements are produced on an industrial scale. The application of the mortar joints can both be performed both manually or by a construction robot. In the known horizontal building method, concrete is applied to the bricks in the mould, such that the options for mortar joints are very limited, basically to the joint wherein the space between the bricks is completely filled with mortar.

By using the vertical building method of the masonry wall, without using a mould, all types of stones or bricks may be used in the present invention. The type of stones or bricks are not limited by mould dimensions such that the tolerances on for instance dimensions of the bricks or stones is not as limiting compared to the method involving a mould for the spatial separation of the bricks. Also, requirements on moisture absorption of the bricks are not as strict.

Since the vertical method of construction of the masonry wall does not involve a mould, all types of bonds may be produced. One could for instance make the masonry wall in a flemish, dutch, monk or sussex bond, without needing separate moulds for each style of bond.

The invention further relates to a method wherein the manufacturing of the masonry wall part is performed without the use of a framework, mould and/or a distance element. Fabrication without the use of moulds and/or frameworks also makes that the dimensions of the prefab building element are not limited to the dimensions of the mould or framework. The use of moulds and/or frameworks makes the production labour- and cost-intensive. The benefit of a method wherein the predetermined distance between the first wall part and the second wall part, and/or the thickness of the wall parts, is not defined by a distance element or spacer provides a larger degree of freedom.

The essentially liquid foam insulation material is possibly a closed-cell foam material. Besides the fact that closed-cell foam material has excellent heat resistance and therefore insulating properties, the material has several more benefits. A benefit can be found in the fact that a closed-cell foam material provides a wind and water barrier in the building element. This makes that no additional wind and/or water barrier layers have to be provided in the building element. A further benefit of a closed cell foam material is that it may increase the structural strength of the building element.

The essentially liquid foam insulation material can for example consist of rigid polyurethane (PUR) and/or polyisocyanurate (PIR). Both PUR and PIR are known for their good insulation properties with a minimal occupation of space.

The insulation material can possibly be provided with a reinforcement material in order to further strengthen the construction. For instance, a reinforcement steel mesh may be placed in the cavity between the two wall parts prior to applying the insulating foam, wherein the mesh preferably connects the first and second wall part. The reinforcement of the insulting material may also be provided with hooks or eyelets, for instance on top, such that after curing/hardening of the insulating material, and thus securing of the reinforcement into the panel, the panel may be lifted or hoisted using these hooks or eyelets.

The method may further comprise the step of connecting the first and second wall part, for instance with metal rods, to reinforce the wall parts prior to bonding them using the foam insulating material. This adds further structural integrity to the panel. The connecting elements are typically enveloped in the insulating material afterwards, which further adds to the rigidity or structural integrity of the panel.

A method is possible wherein at least one window frame is positioned in the first wall part. The at least one window frame can be positioned in the wall part before or after the step of vertically positioning of the first wall part. When positioning a window frame in the first wall part, the second wall part can subsequently be built such that it accommodates the window frame accordingly. Because the insulation layer is applied as an essentially liquid foam insulation material, it is possible to ensure a watertight connection between the window frame and the first wall part and the second wall part, as the essentially liquid foam insulation material fills up the open spaces during expansion, and also provides a sufficient connection between the window frame and the wall parts. Window frames can accommodate for example any type of window or door. Further the prefab wall element can be provided with pre installation of wiring loops, or electrical and/or plumbing systems.

The method for manufacturing of the prefab building element can possibly take place on a trolley, lorry or a cart. A benefit of manufacturing the prefab building element on a trolley, lorry or cart is that this allows to easily move and store the prefab building element, where storing of the prefab building element can both take place with or without the trolley or cart. Possibly more than one prefab building elements can be manufactured on the same trolley. A prefab building element is generally configured to be translocated. This can for example be done by trolley or cart.

The method may also comprise that masonry wall is built (first), and the concrete first wall part is provided at a predetermined distance from the masonry wall, instead of that the masonry wall is built at a predetermined distance from the first wall part. This also provides a cavity which may be filled with an expandable liquid foam, to bond to two wall parts.

The method may also comprise the step between step C) and D) of connecting the first and second wall part using mechanical connecting elements, such as wall ties or anchoring hooks. These elements may be integrated in the first wall part in its construction, but could also be applied later. The mechanical connecting elements provide structural integrity and stiffness to the produced panel, and may provide for a fixed space or cavity to be filled with insulation material.

The thickness of the first wall part is preferably between 50 and 300mm, in particular between 100-200mm. The thickness of the second wall part is preferably between 60 and 150mm, in particular between 70 and 125mm. The height of the prefab building element is preferably between 1 and 5 meters.

The length, or width, of the prefab building element is typically between 3 and 15 meters.

The thickness of the insulation layer is typically between 50 and 200mm.

The invention also relates to a prefab building element, obtainable via a method as described above, comprising a first wall part, and a second wall part, wherein the first wall part and the second wall part are bonded together by a foam insulation material. The prefab building element can possibly contain at least one window frame. Preferably, the prefab building element is not provided with a cavity wall, previously used for creating a layer of air for ventilation. Instead, insulation is provided by the expandable foam material.

The present invention will be further elucidated on the basis of the non-limitative exemplary embodiments shown in the following figures, wherein:
- Figure 1 schematically shows a method according to the present invention, in a side view of a produced panel;
- Figure 2 schematically shows a method according to the present invention, in a side view of a produced panel including a window frame;
- Figure 3 schematically shows a side view of a possible embodiment of a prefab building element including a window frame and sill.

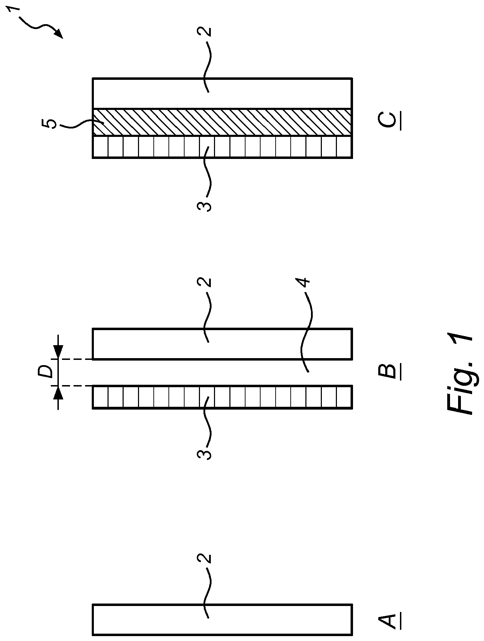

Figure 1 schematically shows three steps in the method according to the present invention. Figure 1 schematically shows a method for manufacturing a prefab building element (1), starting with the first step (A) of providing a first wall part (2) made of concrete, positioned vertically. Next, at step (B) a masonry wall (3) forming a second wall part (3) is build, at a predetermined distance (D) from the first wall part (2). This forms a cavity (4) in between said first wall part (2) and said second wall part (3). In the last step (C), the first wall part (2) and the second wall part (3) are bonded together by filling the cavity with an essentially liquid expandable foam insulation material (5).

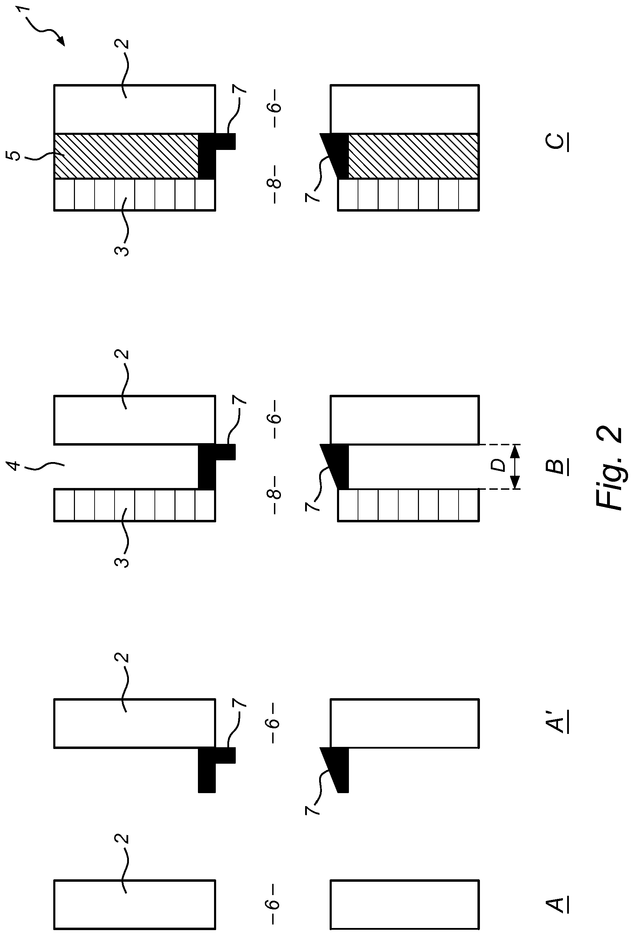

Figure 2 schematically shows four steps in the method according to the present invention. Figure 2 schematically shows a method for manufacturing a prefab building element (1), starting with the first step (A) of providing a first wall part (2) made of concrete, positioned vertically. The first wall part (2) is provided with an opening (6). In step A', a window frame (7) is positioned on the first wall part (2), aligned with the opening (6). Next, at step (B) a masonry wall (3) forming a second wall part (3) is build, at a predetermined distance (D) from the first wall part (2). The masonry wall (3) is also provided with an opening (8), aligned with the opening (6) in the first wall part (2) and the window frame (7). Between the first wall part (2) and the masonry wall, a cavity (4) is present. In the last step (C), the first wall part (2) and the second wall part (3) are bonded together by filling the cavity with an essentially liquid expandable foam insulation material (5). This also encases the window frame (7) between the first wall part (2) and the masonry wall (3) in a water and wind tight fashion.

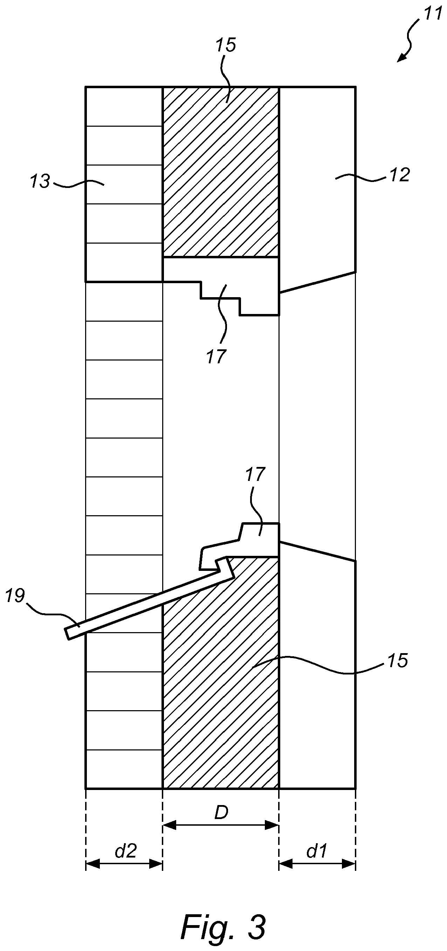

Figure 3 schematically shows a side view of a possible embodiment of a prefab building element (11), comprising a vertically positioned first wall part (12), a second wall part (13) at a predetermined distance (D) from the first wall part (12), wherein a cavity in between said first wall part (12) and said second wall part (13) is filled with an essentially liquid foam insulation material (15). The prefab building element (11) further comprises a window frame (17) and a window sill (19). The window frame (17) and window sill (19) are located in the building element (11) in a watertight and airtight fashion, due to the foam insulation material (15) which is applied according to the invention.

The thickness d1 of the first wall part (12) is for example between 50 and 300 mm, in particular between 100-200 mm. The thickness d2 of the second wall part (13) is for example between 60 and 150 mm, in particular between 70-125 mm, typically 100 mm. The height H of the prefab building element (11) can vary, but is for example between 1 and 5 meters.

It will be apparent that the invention is not limited to the exemplary embodiments shown and described here, but that within the scope of the appended claims numerous variants are possible which will be self-evident to the skilled person in this field.

## Claims

1. Method for manufacturing a prefab building element, comprising the steps of:
A) providing a first wall part (2) made of concrete,
B) vertically positioning the first wall part,
C) building a masonry wall forming a second wall part (3) at a predetermined distance from the first wall part, thus forming a cavity (4) in between said first wall part and said second wall part,
D) bonding the first wall part and the second wall part by filling the cavity with an essentially liquid foam insulation material (5).

2. Method according to claim 1, wherein the first wall part is a single cured concrete wall part.

3. Method according to claim 1 or 2, wherein the first wall part is of substantially the same height and width as the prefab building element and wherein the height of the first wall part is preferably between 1 and 5 meters.

4. Method according to any of the preceding claims, wherein during step b) the complete first wall part is positioned vertically at once, for instance by turning the first wall part vertically or turning the first wall part upright.

5. Method according to any of the previous claims, wherein the masonry wall is built such that there are spaces between the bricks in order to allow mortar joints to be provided, wherein preferably mortar joints are provided in the masonry wall, in particular flush joints or weathered struck joints.

6. Method according to any of the previous claims, wherein the manufacturing is performed without the use of a framework, mould and/or a distance element.

7. Method according to any of the previous claims, wherein the insulation material is provided with a reinforcement material.

8. Method according to any of the previous claims, wherein at least one window frame (7) is positioned in the first wall part before and/or after step A), wherein preferably the window frame is sealed in the prefab building element by the foam insulation material.

9. Method according to any of the previous claims, wherein the manufacturing of the prefab building element takes place on a trolley or a cart.

10. Method according to any of the previous claims, wherein the prefab building element is configured to be translocated.

11. Method according to any of the previous claims, wherein masonry wall is built, and the concrete first wall part is provided at a predetermined distance from the masonry wall, instead of that the masonry wall is built at a predetermined distance from the first wall part.

12. Method according to any of the previous claims, wherein between step C) and D) the method comprises the step of connecting the first and second wall part using mechanical connecting elements, such as wall ties or anchoring hooks.

13. Method according to any of the previous claims, wherein the thickness of the first wall part is between 50 and 300mm, in particular between 100-200mm and/or wherein the thickness of the second wall part is between 60 and 150mm, in particular between 70 and 125mm and/or wherein the height of the prefab building element is between 1 and 5 meters.

14. Prefab building element, manufactured via a method of any of claims 1-13, comprising a first wall part (2) made of concrete, and a second wall part (3) made of masonry, wherein the first wall part and the second wall part are bonded together by a foam insulation material (5).

15. Prefab building element as claimed in claim 14, comprising at least one window frame (7).

## Patentansprüche

1. Verfahren zur Herstellung eines vorgefertigten Bauelements, umfassend die folgenden Schritte:
A) Bereitstellen eines aus Beton hergestellten ersten Wandteils (2),
B) vertikales Positionieren des ersten Wandteils,
C) Errichten einer gemauerten Wand, die einen zweiten Wandteil (3) in einem vorgegebenen Abstand von dem ersten Wandteil bildet und so einen Hohlraum (4) zwischen dem ersten Wandteil und dem zweiten Wandteil bildet,
D) Verbinden des ersten Wandteils und des zweiten Wandteils durch Füllen des Hohlraums mit einem im Wesentlichen flüssigen geschäumten Isoliermaterial (5).

2. Verfahren nach Anspruch 1, wobei der erste Wandteil ein einzelner Wandteil aus ausgehärtetem Beton ist.

3. Verfahren nach Anspruch 1 oder 2, wobei der erste Wandteil im Wesentlichen die gleiche Höhe und Breite wie das vorgefertigte Bauelement aufweist und wobei die Höhe des ersten Wandteils vorzugsweise zwischen 1 und 5 Metern liegt.

4. Verfahren nach einem der vorhergehenden Ansprüche, wobei der vollständige erste Wandteil in Schritt b) umgehend vertikal positioniert wird, zum Beispiel indem der erste Wandteil vertikal gestellt wird oder indem der erste Wandteil hochkant gestellt wird.

5. Verfahren nach einem der vorhergehenden Ansprüche, wobei die gemauerte Wand auf eine solche Weise errichtet wird, dass zwischen den Ziegelsteinen Abstände vorhanden sind, um zu ermöglichen, dass Mörtelfugen bereitgestellt werden, wobei vorzugsweise Mörtelfugen, insbesondere bündige Fugen oder abgeschrägte Mauerwerksfugen, in der gemauerten Wand bereitgestellt werden.

6. Verfahren nach einem der vorhergehenden Ansprüche, wobei die Herstellung ohne die Verwendung eines Gerüst-, Form- und/oder Abstandselements durchgeführt wird.

7. Verfahren nach einem der vorhergehenden Ansprüche, wobei das Isoliermaterial mit einem Armierungsstoff versehen ist.

8. Verfahren nach einem der vorhergehenden Ansprüche, wobei wenigstens ein Blendrahmen (7) vor und/oder nach Schritt A) in dem ersten Wandteil positioniert wird, wobei der Blendrahmen vorzugsweise durch das geschäumte Isoliermaterial in dem vorgefertigten Bauelement abgedichtet wird.

9. Verfahren nach einem der vorhergehenden Ansprüche, wobei die Herstellung des vorgefertigten Bauelements auf einer Karre oder einem Wagen erfolgt.

10. Verfahren nach einem der vorhergehenden Ansprüche, wobei das vorgefertigte Bauelement dazu ausgelegt ist, verlagert zu werden.

11. Verfahren nach einem der vorhergehenden Ansprüche, wobei die gemauerte Wand errichtet wird und der erste Betonwandteil in einem vorgegebenen Abstand von der gemauerten Wand bereitgestellt wird, anstatt dass die gemauerte Wand in einem vorgegebenen Abstand von dem ersten Wandteil errichtet wird.

12. Verfahren nach einem der vorhergehenden Ansprüche, wobei das Verfahren zwischen Schritt C) und D) den Schritt des Verbindens des ersten und des zweiten Wandteils unter Verwendung von mechanischen Verbindungselementen, wie zum Beispiel Wandankern oder Verankerungshaken, umfasst.

13. Verfahren nach einem der vorhergehenden Ansprüche, wobei die Dicke des ersten Wandteils zwischen 50 und 300 mm, insbesondere zwischen 100 und 200 mm liegt, und/oder wobei die Dicke des zweiten Wandteils zwischen 60 und 150 mm, insbesondere zwischen 70 und 125 mm liegt, und/oder wobei die Höhe des vorgefertigten Bauelements zwischen 1 und 5 Metern liegt.

14. Vorgefertigtes Bauelement, hergestellt mit einem Verfahren nach einem der Ansprüche 1 bis 13, umfassend einen aus Beton hergestellten ersten Wandteil (2) und einen aus Mauerwerk hergestellten zweiten Wandteil (3), wobei der erste Wandteil und der zweite Wandteil durch ein geschäumtes Isoliermaterial (5) verbunden sind.

15. Vorgefertigtes Bauelement nach Anspruch 14, umfassend wenigstens einen Blendrahmen (7).

## Revendications

1. Procédé de fabrication d'un élément de construction préfabriqué, comprenant les étapes consistant à :
A) fournir une première partie de mur (2) en béton,
B) positionner verticalement la première partie de mur,
C) construire un mur de maçonnerie formant une seconde partie de mur (3) à une distance prédéfinie de la première partie de mur, formant ainsi une cavité (4) entre ladite première partie de mur et ladite seconde partie de mur,
D) lier la première partie de mur et la seconde partie de mur en remplissant la cavité d'un matériau isolant (5) en mousse essentiellement liquide.

2. Procédé selon la revendication 1, la première partie de mur étant une partie de mur en béton durci unique.

3. Procédé selon la revendication 1 ou 2, la première partie de mur étant sensiblement de la même hauteur et largeur que l'élément de construction préfabriqué et la hauteur de la première partie de mur étant de préférence comprise entre 1 et 5 mètres.

4. Procédé selon l'une quelconque des revendications précédentes, au cours de l'étape b), la première partie de mur complète étant positionnée verticalement en une fois, par exemple en tournant la première partie de mur verticalement ou en retournant la première partie de mur.

5. Procédé selon l'une quelconque des revendications précédentes, le mur de maçonnerie étant construit de sorte qu'il y ait des espaces entre les briques afin de permettre la fourniture de joints de mortier, de préférence des joints de mortier étant fournis dans le mur de maçonnerie, en particulier des joints lisses ou des joints obliques à clin.

6. Procédé selon l'une quelconque des revendications précédentes, la fabrication étant effectuée sans utiliser un cadre, un moule et/ou un élément de distance.

7. Procédé selon l'une quelconque des revendications précédentes, le matériau isolant étant pourvu d'un matériau de renforcement.

8. Procédé selon l'une quelconque des revendications précédentes, au moins un cadre de fenêtre (7) étant positionné dans la première partie de mur avant et/ou après l'étape A), de préférence le cadre de fenêtre étant scellé dans l'élément de construction préfabriqué par le matériau isolant en mousse.

9. Procédé selon l'une quelconque des revendications précédentes, la fabrication de l'élément de construction préfabriqué ayant lieu sur une table roulante ou un chariot.

10. Procédé selon l'une quelconque des revendications précédentes, l'élément de construction préfabriqué étant conçu pour être déplacé.

11. Procédé selon l'une quelconque des revendications précédentes, un mur de maçonnerie étant construit, et la première partie de mur en béton étant située à une distance prédéfinie du mur de maçonnerie, au lieu que le mur de maçonnerie soit construit à une distance prédéfinie de la première partie de mur.

12. Procédé selon l'une quelconque des revendications précédentes, entre les étapes C) et D), le procédé comprenant l'étape consistant à relier la première et la seconde partie de mur à l'aide d'éléments de liaison mécaniques, tels que des chaînages ou des crochets d'ancrage.

13. Procédé selon l'une quelconque des revendications précédentes, l'épaisseur de la première partie de mur étant comprise entre 50 et 300 mm, en particulier entre 100 et 200 mm et/ou l'épaisseur de la seconde partie de mur étant comprise entre 60 et 150 mm, en particulier entre 70 et 125 mm et/ou la hauteur de l'élément de construction préfabriqué étant comprise entre 1 et 5 mètres.

14. Élément de construction préfabriqué, fabriqué par un procédé selon l'une quelconque des revendications 1 à 13, comprenant une première partie de mur (2) en béton, et une seconde partie de mur (3) en maçonnerie, la première partie de mur et la seconde partie de mur étant liées ensemble par un matériau isolant (5) en mousse.

15. Élément de construction préfabriqué selon la revendication 14, comprenant au moins un cadre de fenêtre (7) .
